# EUROPEAN PATENT SPECIFICATION

(11) **EP 3 649 532 B1**
(45) Date of publication and mention of the grant of the patent: **07.12.2022**
(21) Application number: 17916710.1
(22) Date of filing: 13.10.2017
(51) Int. Cl.: G06F 16/22

(54) **METHODS, SYSTEMS, DATABASES AND NETWORK NODES OF DATA COMMUNICATION NETWORKS FOR HANDLING DATA POSTS**
VERFAHREN, SYSTEME, DATENBANKEN UND NETZWERKKNOTEN VON DATENKOMMUNIKATIONSNETZWERKEN ZUR HANDHABUNG VON DATENPOSTS
PROCÉDÉS, SYSTÈMES, BASES DE DONNÉES ET N UDS DE RÉSEAU DE RÉSEAUX DE COMMUNICATION DE DONNÉES DESTINÉS À GÉRER DES PUBLICATIONS DE DONNÉES

(30) Priority: 07.07.2017 US 201762529658 P
(43) Date of publication of application: 13.05.2020
(73) Proprietor: Telefonaktiebolaget LM Ericsson (publ), 164 83 Stockholm (SE)
(72) Inventor: HÅKANSSON, Jim, 371 51 Karlskrona (SE); KASPERSSON, Mikael, 371 34 Karlskrona (SE); GERDOVCI, Petrit, 371 63 Karlskrona (SE); MARINESCU, Teodor, 371 41 Karlskrona (SE)
(74) Representative: Ericsson
(86) International application number: PCT/SE2017/051009
(87) International publication number: WO 2019/009773

(56) References cited:
- US-A- 5 806 065
- US-A1- 2009 210 429
- US-A1- 2015 278 307
- US-A1- 2015 278 307
- US-B1- 7 581 227
- DANZIG P B ED - BOOKSTEIN A ET AL: "DISTRIBUTED INDEXING: A SCALABLE MECHANISM FOR DISTRIBUTED INFORMATION RETRIEVAL", PROCEEDINGS OF THE ANNUAL INTERNATIONAL ACM/SIGIR CONFERENCE ON RESEARCH AND DEVELOPMENT IN INFORMATION RETRIEVAL. CHICAGO, OCT. 13 - 16, 1991; [PROCEEDINGS OF THE ANNUAL INTERNATIONAL ACM/SIGIR CONFERENCE ON RESEARCH AND DEEVELOPMENT IN INFORMATION, vol. CONF. 14, 13 October 1991 (1991-10-13), pages 220-229, XP000239173,

## Description

### Technical field

The present disclosure relates generally to methods, systems, network nodes, computer program and carrier of data communication networks for handling data posts stored in a database of the network.

### Background

Today, database systems are used for storing data such as data posts comprising data of e.g. customers to organizations. Such a database system operates in a data communication network. The database system comprises a database, a first network node and a second network node, wherein the first and the second network node are connected to the database. Also, the database operates as a server with respect to the first and the second network nodes operating as clients to the database. The data posts stored in the database each comprises one or more data values of different categories and a unique identification, ID, of the data post. When an operator needs information from the database system, he/she uses one of the clients of the database system to communicate with the database over a communication interface between the client and the database in order to access data stored in the database. The data may be found using the ID of the stored data posts.

Organizations that utilize such database systems experience limitations of network bandwidth, throughput and computational performance at the clients, servers and over the communication interface between the clients and the server when communicating between the clients and the server. These limitations are foundational to present client-server networked database systems.

US 7581227 B1 describes systems and methods for synchronizing indexes. US 2015/278307 A1 describes delegating portions of an index of an enterprise. On a client and database server setup, network round-trip, competing multi query traffic or large single query traffic, network stability, bandwidth and traffic density can severely affect performance independent of unused client computing power. Increased number of clients on a network requires also server scalability to sustain increased query volumes. All these factors sum up to a need of improving of the database system handling so as to be less dependent on these limiting factors.

The database may be distributed over different locations or located at one place. Distributed databases are normally optimized for finding data based on key-value, i.e. a unique ID, comparable to a primary key in Structured Query Language, SQL, databases. A distributed database based on a key-value search is very good performance and scaling wise. A client is used to query the database, and is usually integrated into an application, such as a web server of a customer care service system or a customer relationship management system, CRM, to form the client-server model. If an application requires to query data based on properties other than the key-values, three main solutions are available:
- One is to build an index at the database server, which is aware of the underlying database structure
- Another is to use a query cache solution which is not aware of the underlying database structure
- A third is to perform a distributed query

If a database is to handle the index, it will be handled as any other key-value when making non-key-value queries. Allowing the database to handle the index is usually the case in existing technology for solving the problem of querying non-key-value properties. When executing a distributed query, i.e. a query to a distributed database, the query is to be sent to all instances of the distributed database that persist the data; afterwards each instance returns its part of the result to the requesting client, possibly via a node such as a transaction manager that collects the parts of the result before sending the result further to the client.

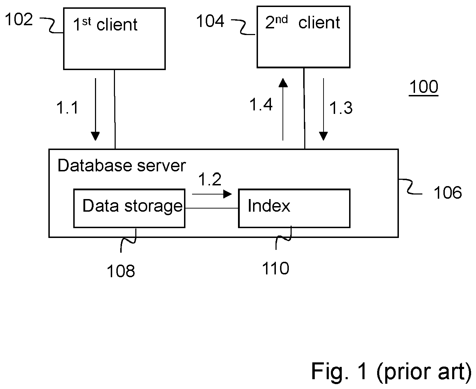

An example of a database system 100 working according to prior art is shown in Fig. 1. The database system 100 comprises a first client, (aka client application) 102, a second client 104 and a database server 106. The database server comprises a data storage 108, aka persistence layer, wherein data is stored and an index handling unit 110 for handling index data. The example shows how new customer data comprising index data, non-index data and an ID identifying the customer is maintained by the database and how the index data is updated and later used for searching by the applications. Firstly, the first client 102 sends a query 1.1 to add the new customer data to the database server 106. This data is stored in the data storage 108. The server 106 then updates 1.2 its index handling unit 110 with the index data and the ID of the new customer data. The index data comprises customer properties which should be searchable. Later on, the second client 104 searches for the new customer data by requesting 1.3 the data from the database server 106. The database server 106 then reads the index data of the new customer from its index handling unit 110, and sends 1.4 the index data to the second client application 104. In this case, the database server does not need to go down to the persistence layer, e.g. a disk, and scan for the result; the index handling unit will be queried instead.

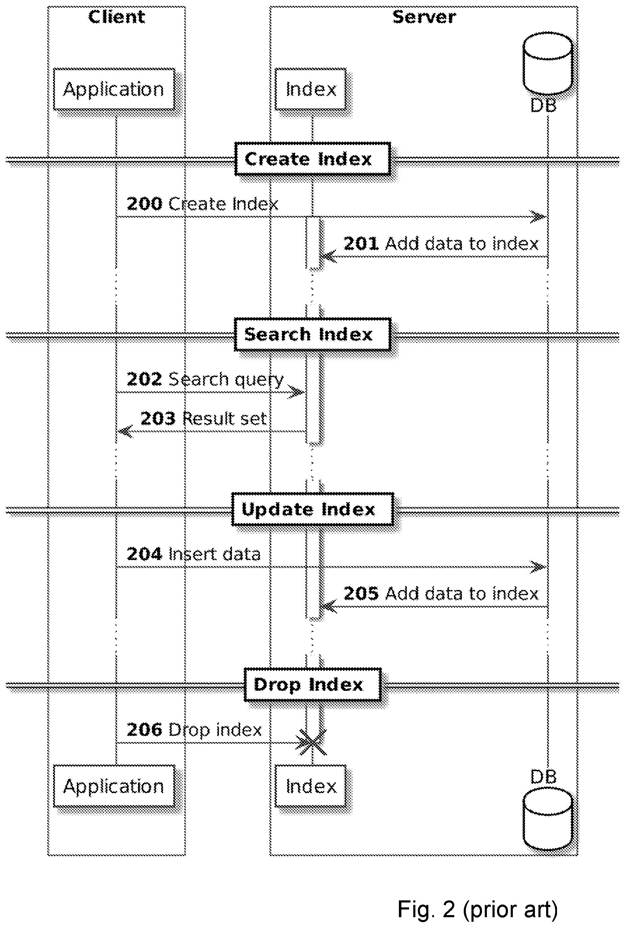

Fig. 2 illustrates another, more detailed, example of handling of data in a database system according to prior art. The client application 102 of fig.1 sends a request 500 for creating an index to the database 106. In response, an engine of the database creates an index that is stored in the index handling unit 110 of the database, by adding 501 ID and index data of some or all of the data posts stored in the database to the index. Consequently, the index is stored locally at the database. When the client application 102 later on search for data using index data, the client application sends a search query 502 comprising index data to the index handling unit 110, and the index handling unit responds with a set of results 503 that is sent to the client application 102. In the example of fig. 2 only one client application is shown, however, normally a plurality of client application are used, connected separately to the database. When the client application 102 needs to update data stored in the database 106, for example with a new data post, a message 504 is sent to the database comprising the new data post including ID and index data, here exemplified with Customer ID "123" and Name "John Doe". In order to update the index stored in the index handling unit 110, the database engine 106 adds 505 the ID "123" and the name "John Doe" to the index. Further, in case, the client application decides to drop the stored index, an instruction 506 to drop the stored index is sent to the index handling unit 110 of the database, which drops the stored index.

By maintaining such an index, a good search performance can be achieved for simple queries, taking into account that only the index is queried. The index has huge performance improvements compared to going down to database disk and scan for the results.

When using a distributed database and when creating new indexes in such a distributed database, the indexes will need to be scattered in each server instance. This mean that a query to the index might need to span over multiple nodes of the distributed database until the client application can receive the result of the query. Thus, by adding more nodes to a distributed database, the index of the database server will not scale very well, as more nodes might need to be queried for finding the result. Secondly, having an index on a database server takes up additional space on the server. The server will already take up a lot of disk space since it is responsible for the actual persistence of data. This might not be a problem if the index is not persisted, but to handle failures, the index will need to be persisted.

The other main prior art method of using a cache solution has a main drawback in that the cache is empty at the starting point, and that the cache is filled during use; each value not already stored in the cache is stored when it comes up in a query. In other words, the cache has to warm-up to be useful. Every new query will warm the cache and can subsequently replace the database access with a cache response, which is quicker than going down into the database storage to fetch data. However, it still does not give any new query possibility. Also, the data is arranged, more or less, in the same way as in the original data storage. Within a load shared solution that is distributed in nature, data integrity and cache coherence in clustered deployments can be a significant challenge that require solutions and computing bandwidth to work.

Lastly, distributed queries to achieve higher performance are not useful in large distributed databases with high frequency fast-running queries, due to performance limitations. A distributed query also has a negative scaling factor, if more instances are added to a distributed database, the distributed query performance decrease.

As shown above, there is a need for an improved method and an improved system for searching information in data stored in databases. Such a method and system should be efficient in terms of usage of network resources, and results of a search should be found and presented to a requesting client application with low latency.

### Summary

It is an object of the invention to address at least some of the problems and issues outlined above.

The invention is set out in the appended set of claims. The object of the invention is solved by the features of the independent claims. Further embodiments are the subject-matter of the dependent claims.

Further possible features and benefits of this solution will become apparent from the detailed description below.

### Brief description of drawings

The solution will now be described in more detail by means of exemplary embodiments and with reference to the accompanying drawings, in which:
Fig. 1 is a block diagram according to the prior art.
Fig 2 is a signaling diagram according to the prior art.
Fig. 3 is a block diagram of a database system in which the present invention may be used.
Figs. 4-10 are flow charts illustrating different embodiments of the invention.
Fig. 11 is a block and signaling diagram illustrating an embodiment of the invention.
Figs. 12-16 are signaling diagrams illustrating different embodiments.
Fig. 17 is a block and signaling diagram illustrating an embodiment of the invention.
Fig. 18 is a signaling diagram illustrating an example of the use case presented in fig. 17.
Figs. 19-20 are block diagrams illustrating a database in more detail, according to further possible embodiments.
Figs. 21-22 are block diagrams illustrating a second network node in more detail, according to further possible embodiments.

### Detailed description

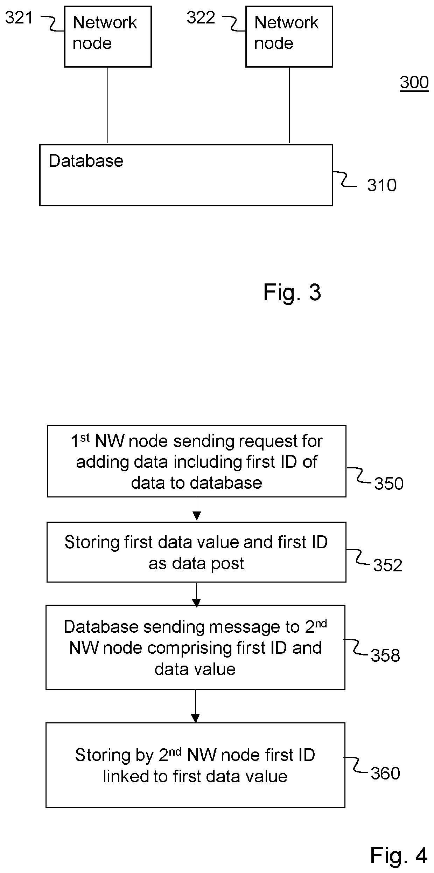

Fig. 3 shows a system of a data communication network in which the present invention may be used. The system comprises a database 310, a first network node 321 and a second network node 322, the first and the second network node 321, 322 being connected to the database 310. The database 310 operating as a server with respect to the first and the second network nodes 321, 322 operating as clients to the database 310. The system is used for handling data posts, wherein each data post comprises one or more data values of different categories and a unique ID of the data post.

The basic idea of the present invention is to move the query handling from the database server to the client applications, i.e. to the network node clients. Hence, the index is moved from the database server to the network node clients. This means that there will be no impact on the database when performing a query from the clients. The network node clients will be responsible for both processing search requests and maintaining the index.

According to an embodiment shown in fig. 4, a method performed by a system described in fig. 3 is provided. The method comprises sending 350, by the first network node 321 to the database 310, a request for adding data to the database 310, the request comprising the data, the data including a first data value and a first ID of the data, and storing 352, by the database 310, the first ID and the first data value as a new data post. The method further comprises sending 358, by the database 310 to the second network node 322, a message comprising the first ID and the first data value, and storing 360, by the second network node 322, the first ID linked to the first data value, thus making the data stored at the database 310, received from the first network node 321, searchable at the second network node 322.

By in this way sending data values and ID of data posts from the database to the second network node, which data post was stored by the database on request from the first network node, data updated from the first network node becomes searchable at the second network node, without the second network node having to fetch the updated data from the database. Consequently, searches for data stored in a database system can be performed locally and the latency for receiving a response to a search query is lowered considerably compared to having to search the database, or even an index in a database, as described in prior art according to fig. 1 and 2. Also, resources of a communication interface between the second network node and the database are not required for performing a search, resulting in that these resources can be used for other purposes. Further, if a search from the second network node needs to go down to the database to fetch data, as in prior art, the database server will need to handle both regular create, read update and delete, CRUD, operations, and also at the same time handle search queries. This results in a lot of processing to be done for the database server, this in the end contributing to an increase in latency. In other words, by keeping an updated storage at the second network node, updated with changes made on the database, the processing needed to be done for the database server is lowered compared to prior art.

The second network node mentioned above may be many second network nodes, where in one embodiment said second network nodes includes the first network node whereas in another embodiment said second network nodes does not include the first network node. In other words, after the first network node has sent the request to add data and the database has been updated accordingly, the database sends messages with the first ID and the first data value to a plurality of second network nodes. The plurality of second network nodes may be e.g. in hundreds. The database may also send a message with the first ID and the first data value to the first network node even though the first network node sent the request for adding data.

According to an embodiment, the different categories of the data values are index categories or non-index categories, wherein the first data value is of an index category and the received data further comprises a second data value of a non-index category, wherein, the database is arranged to store 352 the second data value as well as the first data value and the first ID as the data post, , and wherein the message sent 358 by the database 310 to the second network node comprises the first ID and the first data value but not the second data value.

By such an embodiment, the second network node is updated with index category values and not with non-index category values. Consequently, with this embodiment, a searchable index is moved from the database to the network nodes. The index can be stored in a memory of an index handling unit of the second network node, so the actual searching on the database server side will be efficient.

The storing 360 performed by the second network node 322 comprises storing the first ID in an index storage of the second network node, the index storage comprising an index group comprising the first ID as well as other IDs of other data posts received by the second network node that also have the first data value. Hereby, all data posts having a certain data value can be found quick and easy in one and the same index group.

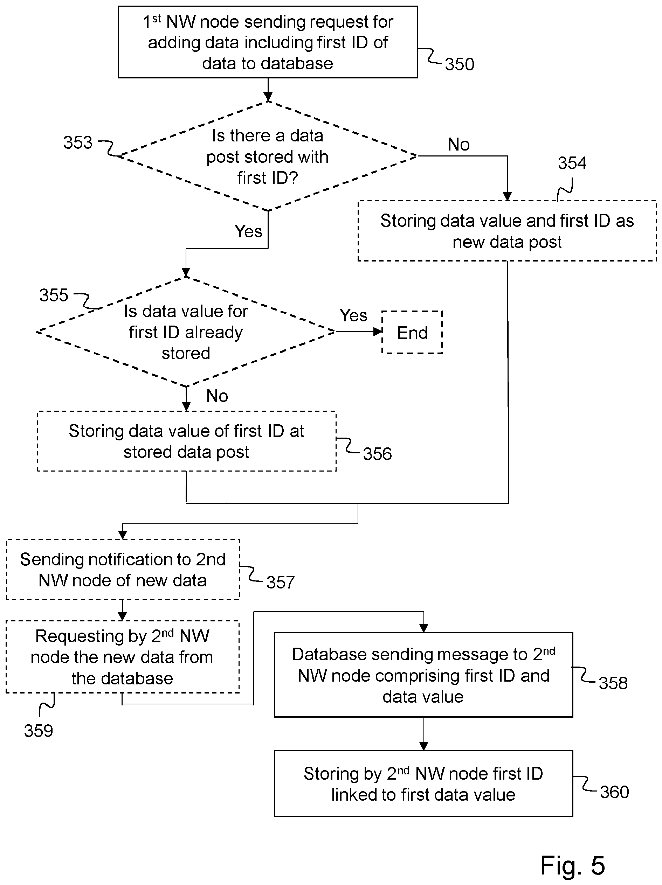

Fig. 5 shows the embodiment of fig. 4 added with different optional embodiments, the optional embodiments are drawn with broken lines in fig. 4. According to one such optional embodiment, the method further comprises sending 357, by the database 310, a notification to the second network node of new data to be stored at the second network node, the notification having a time stamp, and requesting 359 by the second network node, the new data from the database according to the notification and the time stamp, and wherein the message comprising the first ID and the first data value is sent in response to the request 359 by the second network node. Hereby, the second network node can request updates to its locally stored data when it has time. Also, the time stamp makes it possible for the second network node to receive updates in a correct time order.

According to another embodiment, fig. 5 shows, after the database has received the request 350 for adding data from the first network node including the first ID and the first data value, that the method may also comprise the database 310 checking 353 whether there is already a data post stored at the database having the first ID, and if so, checking 355 whether the first data value is already stored for the first ID. Based on the results of such checking, storing steps 354 and 356 described in the following may be performed.

According to an embodiment, the storing 352 of fig. 4, of the first ID and the first data value as a data post comprises storing 354, by the database 310, the first ID and the first data value as a new data post when there is no data post stored at the database having the first ID, or storing 356, by the database 310, the first data value in connection with the data post of the first ID when there is a data post stored at the database having the first ID but the first data value is not previously stored for the first ID.

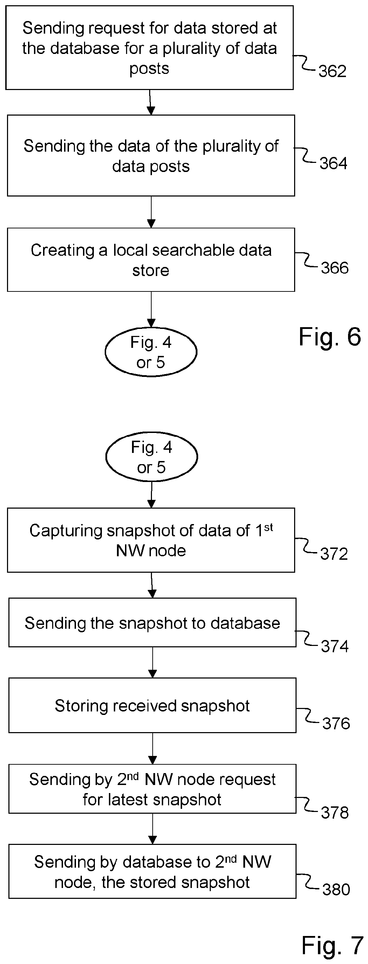

Fig. 6 shows one of the different optional embodiments. A possible place where the steps of figure 6 could be inserted is before the steps of figure 4 or 5, marked "fig, 4 or 5". According to fig. 6, the method further comprises sending 362, by the first network node 321 to the database 310, a request for data stored at the database for a plurality of data posts, in response to the request, sending 364 by the database 310 to the first network node 321, the data of the plurality of data posts to the first network node, and creating 366, by the first network node 321, a local searchable data storage of the data of the plurality of data posts received. Hereby, a local searchable data storage of the first network node is created which can be used for later searching of data directly from the second network node without having to access the database. This local searchable data storage is then updated using e.g. the method described in fig. 4. In the process of requesting creation of a local searchable data storage, the first network node may also request from the database, notifications of forthcoming changes of data stored in the database.

Fig. 7 shows another of the different optional embodiments. A possible place where the steps of figure 7 could be inserted into the methods of figs. 4 or 5 is after the steps of figure 4 or 5, marked "fig, 4 or 5" in fig. 7. According to fig. 7, the method further comprises capturing 372, by the first network node 321, a snapshot of data stored at the first network node, data that was received from the database 310, the data comprising the first ID and the first data value, and sending 374, by the first network node 321 to the database 310, the snapshot of data stored at the first network node. The method further comprises storing 376, by the database, the received snapshot, sending 378, by the second network node 322 to the database 310, after the snapshot has been stored 376, a request for the latest stored snapshot, and sending 380, by the database 310 to the second network node 322, the stored snapshot, in response to the request from the second network node. Hereby, a copy of data stored locally at the first network node is kept at the database, and if the second network node for some reason would lose its own locally stored data, it can request and receive the latest stored copy of equivalent locally stored data from the database. The snapshot of data stored at the first network node may be index category values and their unique IDs.

According to an embodiment, the system is a business support system of a telecommunication service provider, the first and the second network nodes 321, 322 are customer care service applications and the database 310 is a database comprising customers of the telecommunication service provider.

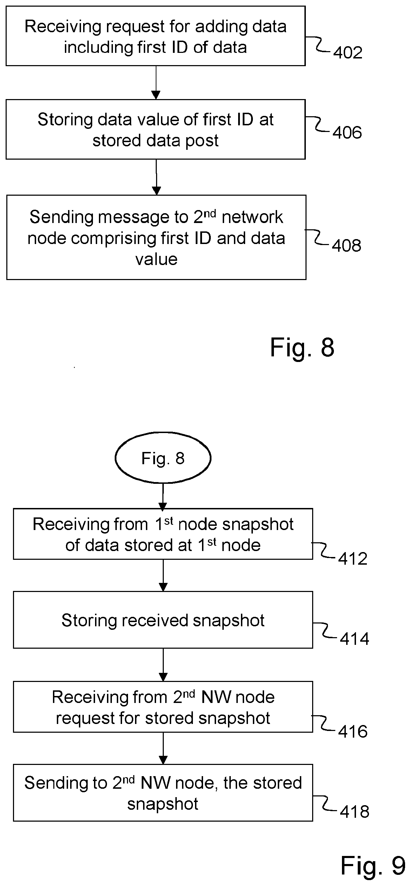

Fig. 8, in conjunction with fig.3, describes an embodiment of a method performed by a database 310 operating in a data communication network as a server with respect to a first and a second network node 321, 322 operating as clients to the database server 310, for handling data posts, each data post comprising one or more data values of different categories and a unique ID of the data post. The method comprises receiving 402, from the first network node 321, a request for adding data to the database 310, the request comprising the data, the data including a first data value and a first ID of the data, and storing 406 the first ID and the first data value as a data post,. The method further comprises sending 408 a message to the second network node 322, the message comprising the first ID and the first data value, so that the second network node can store the first ID linked to the first data value, thus making the data stored at the database 310 searchable at the second network node.

The database may be realized as a single node or as a plurality of distributed nodes, called a distributed database. Data stored in the database may be distributed onto the plurality of nodes of the distributed database. Functionality for performing the method may be spread out over different physical, or virtual, nodes of the distributed database, in a so called cloud network.

According to an embodiment, the different categories of the data values are index categories or non-index categories, wherein the first data value is of an index category and the received data further comprises a second data value of a non-index category. Further, the storing 406 comprises storing the second data value as well as the first data value and the first ID as the data post. Further, the message sent 408 to the second network node comprises the first ID and the first data value but not the second data value.

According to an embodiment, the method further comprises sending a notification to the second network node of new data to be stored at the second network node, the notification having a time stamp, and receiving a request from the second network node of the new data according to the notification and the time stamp. Further, the message comprising the first ID and the first data value is sent 408 in response to the request received from the second network node.

Fig. 9 describes an embodiment of the method described in fig. 8. A possible position where the steps of figure 9 could be inserted into the method of fig. 8 is after the steps of figure 8, marked "fig, 8" in fig. 9. According to the embodiment of fig. 9, the method further comprises receiving 412, from the first network node 321, a snapshot of data stored at the first network node, data that was received from the database 310, the data comprising the first ID and the first data value, and storing 414 the received snapshot. The method further comprises receiving 416, from the second network node 322, after the snapshot has been stored 414, a request for the latest stored snapshot, and sending 418 to the second network node 322, the stored snapshot, in response to the request from the second network node.

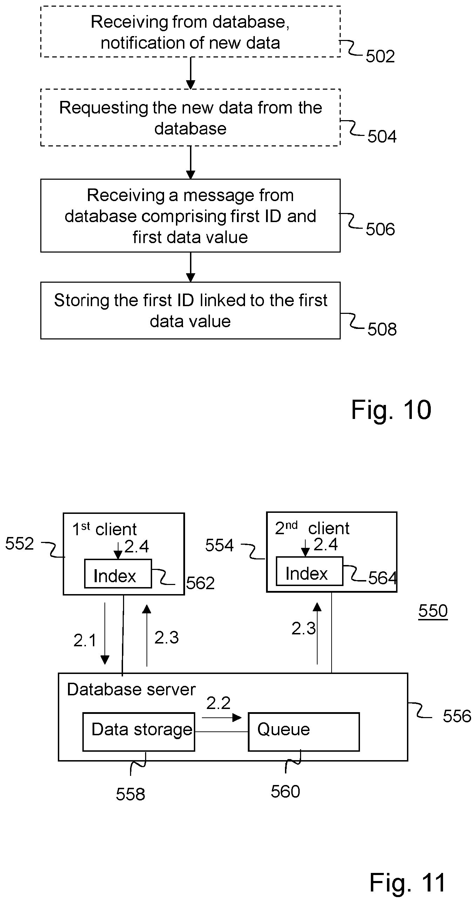

Fig. 10, in conjunction with fig. 3, describes a method performed by a second network node 322 operating in a data communication network as a client with respect to a database 310 operating as a server to the second network node 322. The network further comprises a first network node 321 operating as a client with respect to the database. The method handles data posts, each data post comprising one or more data values of different categories and a unique ID of the data post. The method comprises receiving 506a message from the database 310, the message comprising a first ID and a first data value, the message being received in response to a request from the first network node 321 to the database 310 to add the first data value and the first ID to the database. The method further comprises storing 508 the first ID linked to the first data value, thus making the first ID and the first data value stored at the database 310 searchable at the second network node.

According to an embodiment, the different categories of the data values are index categories or non-index categories, wherein the first data value is of an index category and the message received 506 from the database comprises index category values but not non-index category values.

The storing 508 comprises storing the first ID in an index storage, the index storage comprising an index group comprising the first ID as well as other IDs of other data posts received by the second network node that also have the first data value.

According to another embodiment, the method may further comprise receiving 502, from the database 310, a notification of new data to be stored at the second network node, the notification having a time stamp, and requesting 504 from the database, the new data according to the notification and the time stamp, and wherein the message comprising the first ID and the first data value is received 506 in response to the sent request 504.

According to another embodiment, the method may further comprise searching for data related to the first ID and receiving the first data value from a storage linked to the second network node. In other words, after the second network node has stored the first ID linked to the first data value locally, the second network node can search and find the first data at a storage of the second network node.

In the following, a detailed description is given of an embodiment for maintaining an index at the client application side instead of at the database server side as in prior art. In this embodiment, a messaging queue may be used at the server side. The essence of the messaging queue is to trigger notifications if any data has changed in the persistence layer, i.e. at the data storage of the server. This way clients are able to keep their indexes in sync and consistent with the rest of the database system. This embodiment can be applied to any distributed database. The requirements for the server and data storage is a key-value storage, where the key, e.g. unique ID is the identifier of the stored data. Further any type of messaging queue can be used to keep the index on the client side in sync. According to an embodiment, a First In First Out, FIFO, queue is used.

Fig. 11 shows an overview illustrating an embodiment for signals sent in order to handle an index maintained by the first and second client. Fig. 11 shows how new customer data comprising index data, non-index data and an ID identifying the customer is maintained by the database server 556 and how the index data is updated in the first and second client 552, 554, and later used for searching by the applications. Firstly, the first client 552 sends a query 2.1 to add the new customer data to the database server 556. This data is stored in the data storage 558 of the database server 556. Then the same piece of data, or at least index data of the customer data and the ID identifying the customer are put 2.2 into a messaging queue 560 of the server 556. The clients, i.e. the first and second client 552, 554 receives 2.3 from the messaging queue 560 a notification of new data in the queue. The notification may or may not comprise the data. In case the notification does not comprise the data, the clients can obtain the data when they have time. The notification tells the clients 552, 554 to update their index with the new piece of data. The index is updated with the new piece of data using their respective index handling unit 562, 564. Later on, when the first or second client 552, 554 search for data relating to this customer, the clients will search in their respective indexes. As a consequence, the searching for data becomes more efficient with lower latency, as the clients can search locally for the customer data. Also, the execution of a search does not affect performance of the database as the search is performed solely at the clients.

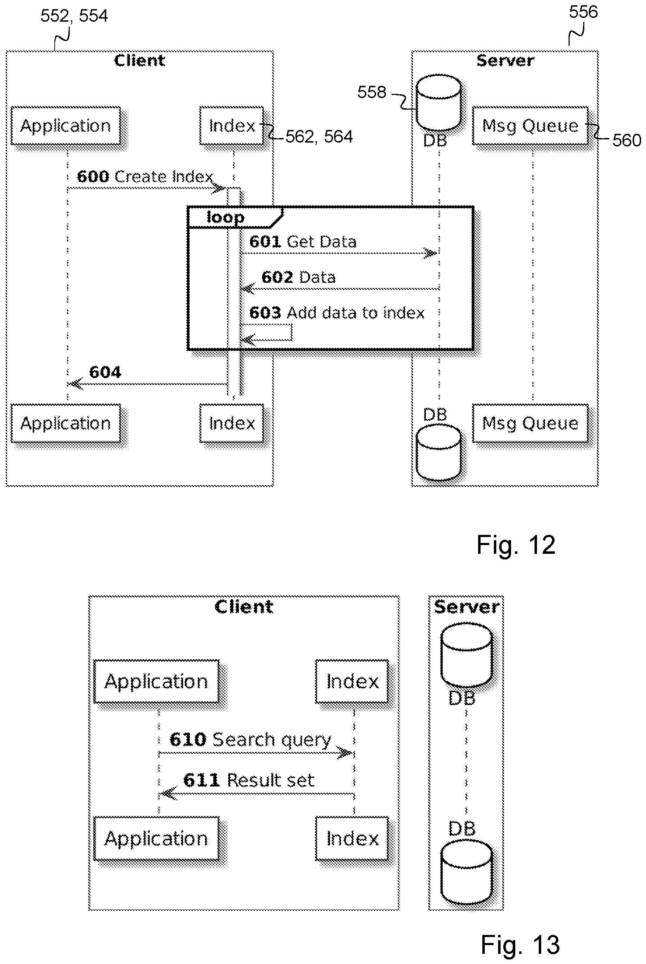

Fig. 12 shows how an index, comprising data of a plurality of data post from the database, is created at the client side 552, 554. From the application of the client, a request 600 to create an index is sent to the index handling unit 562, 564 of the client. The index handling unit in turn retrieves 601, 602 data of the plurality of data posts from the database 558 of the server 556 and index the data locally. The data may be retrieved post by post or in groups of posts and added 603 locally until the full index is built up, by the index handling unit. When the index has been built up, the index handling unit 562, 564 informs 604 the application.

Fig. 13 illustrates searching for data in an index created for example as described in fig. 12. Searching the index happens locally on the client side. In other words, the client application creates and sends a search query 610 to the index handling unit of the client. The index handling unit finds the requested data in the index and returns a result set 611 to the Consequently, the server database will not be contacted, which leads to fast search queries, no network latency as well as no network bandwidth needed for the search queries.

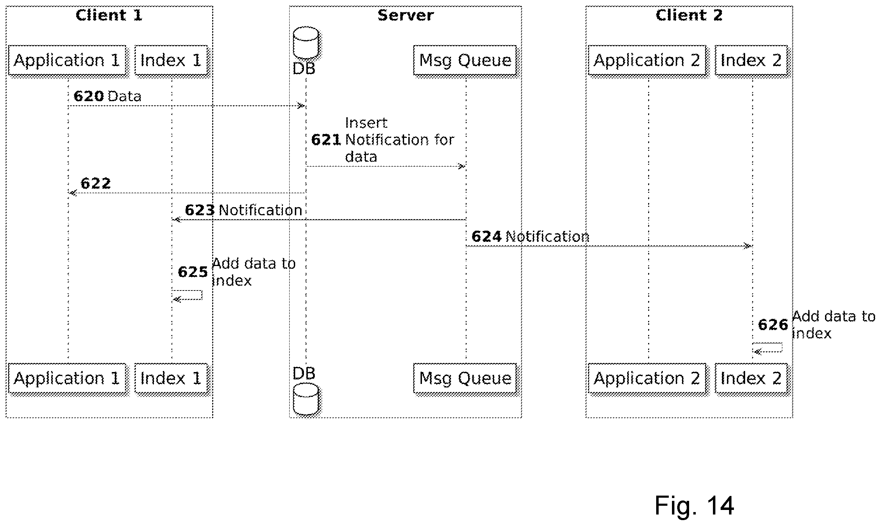

Fig. 14 illustrates how updating of the index works. Application 1 of Client 1 sends data 620 of a new customer to the database, DB, of the server. The new customer data is exemplified with customer ID "123" and customer name "John Doe". The database inserts a notification of new data 621 into the messaging queue. The messaging queue may be a FIFO. In this case the notification waits in the messaging queue until it is the oldest notifcation in the queue. Thereafter, the notification is sent 623 to the index handling unit, Index1, of the first client. The the notification is also sent 624 to the index handling unit, Index2, of the second client. In this embodiment, the notification comprises customer ID "123" and customer name "John Doe". Both Index 1 and Index 2 then update 625, 626 their respective indexes with the received new data.

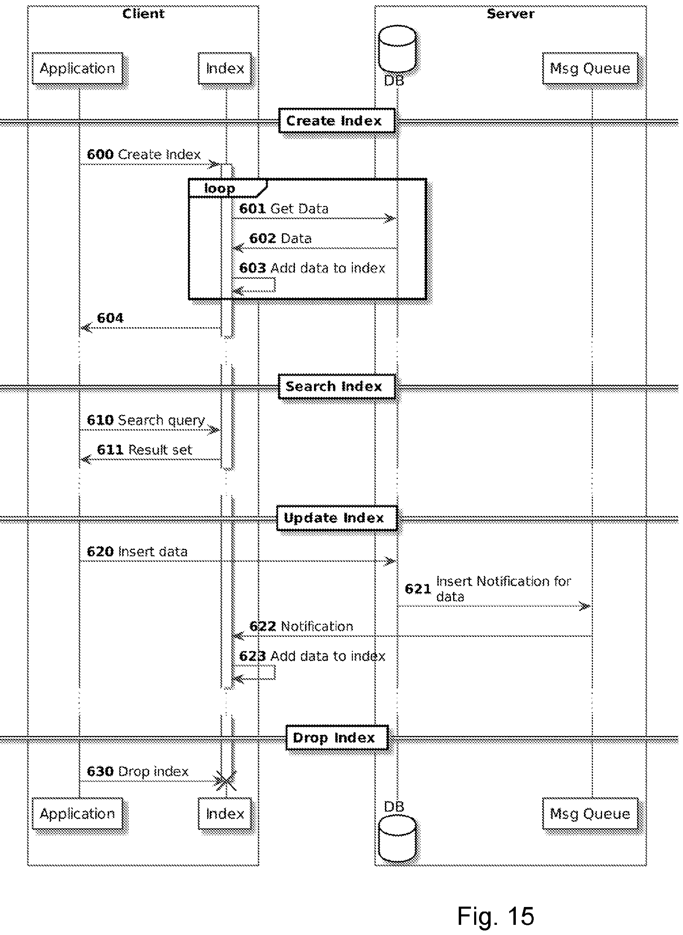

An overview of an index life cycle is shown in fig. 15. The index life cycle comprises: creation of index (separately shown in fig. 12), searching index (separately shown in fig. 13), updating index (separaetly shown in fig. 14) and dropping the index. Dropping the index is performed by sending a drop index message 630 from the application to the index handling unit, Index, of the client. The dropping of the index signifies dropping all or at least a plurality of the data stored locally by the index handling unit. A connection is needed for creating and updating the index while searching and dropping the index is managed locally within the client.

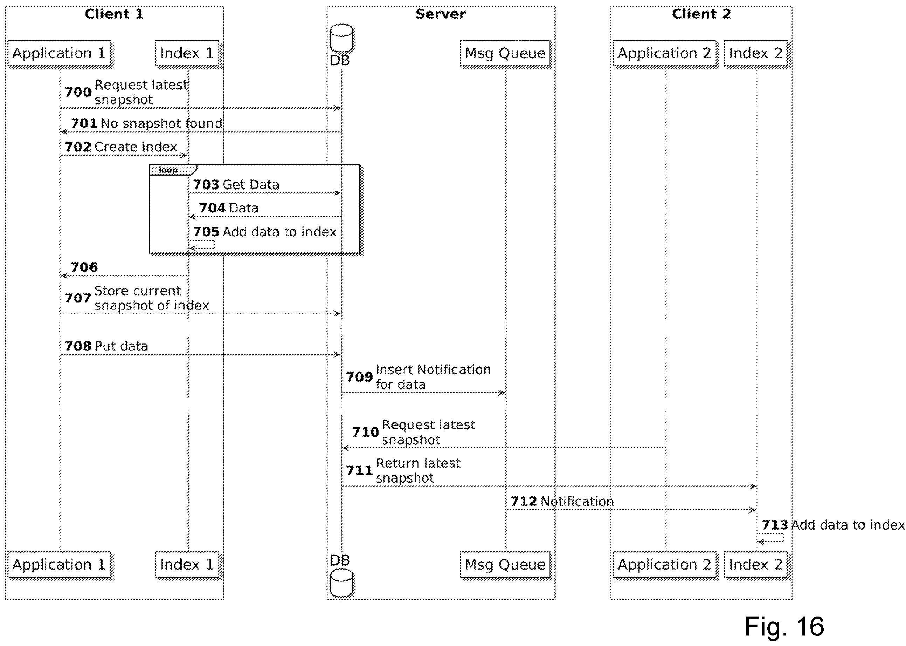

Fig. 16 illustrates an embodiment of a process for restoring a lost index. Hereby, it is not necessary to rebuild the whole index every time a client restarts. The embodiment mainly focuses on persisting the index built locally on a client, in the database server. The process reads as follows: Application 1 of client 1 starts up and sends a message 702 to its index handling unit to create an index. The index is created as described in fig. 12. After the indexing of the data is completed, Application 1, or Index Handling unit (Index1) captures a snapshot of the index and sends 707 the snapshot of the index to the database, where after the snapshot is stored in the database. The snapshot is actually a copy of the index. Application 1 then later on sends 708 data of a new customer, e.g. customer ID "123" and name "John Doe" to the server, which data is stored in the database server and also inserted 709 in the messaging queue of the server. Then Application 2 starts up. Application 2 then requests 710 the latest snapshot of the index from the database, i.e. the snapshot stored in response to message 707. After the database has returned 711 the snapshot of the index, Application 2 receives a notification 712 of a new customer being added, e.g. by Application 1. The data of the new customer is afterwards added to the index that was received as the snapshot.

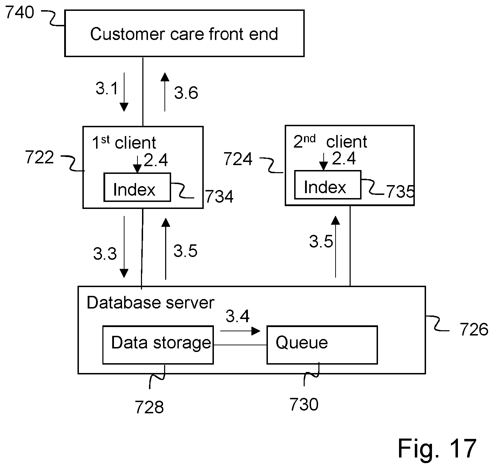

Fig. 17 shows an embodiment of the invention put into the context of a business support system, BSS. A BSS is composed of a set of components that telecommunication service provides use to run several of business operations towards customers. In this embodiment we will focus on a customer care (CC) service application. A customer care service is an important part of the BSS, as it allows for telecom service provides to manage their customers' information. A CC agent is usually responsible for managing the customers.

In fig. 17 a simple use case is illustrated where a customer has moved, for which reason the home address of the customer needs to be changes in the BSS. The procedure is as follows: A customer calls a customer care agent working at a customer care front end computer 740 and informs of his or her name and new address. The customer agent searches 3.1 for the customer via the index 734 of the first client application 722 and retrieves 3.2 the unique internal customer ID. The customer care agent inserts the new address and the first client application sends a request 3.3 to the database server 726 to update the customer ID with the new address in its data storage 728. The server puts a notification 3.4 into the messaging queue for the updated customer. The updated customer information, i.e. customer ID and new address is sent 3.5 by the messaging queue 730 to the first and the second client application 722, 724. The new address is stored in the respective index by the respective index handling unit 734, 735 of the first and second client application 722, 724. The updated customer information is then presented 3.6 in the front-end user interface.

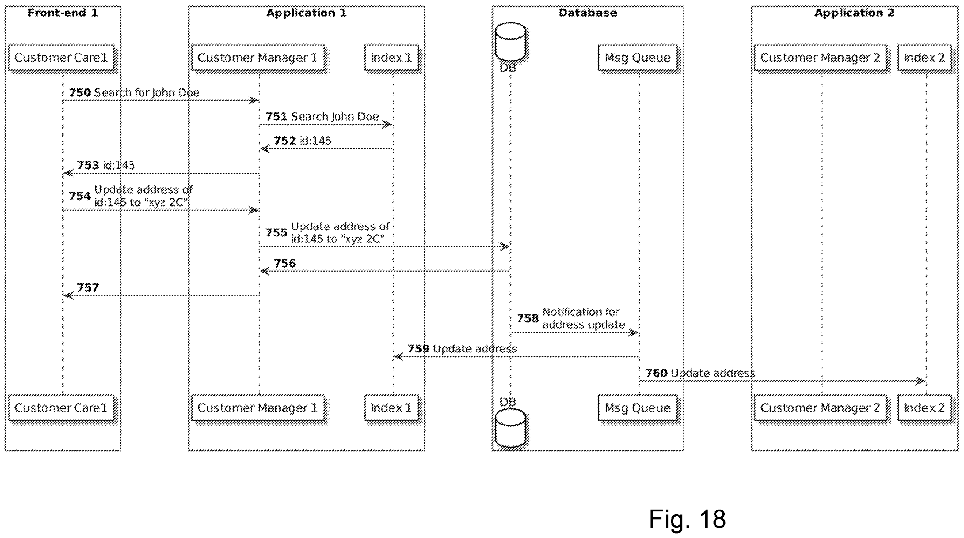

Fig. 18 illustrates a more detailed example of the same use case as in fig. 17. Fig. 18 illustrates that the customer "John Doe" has moved from the address "abc 1B" to his new address "xyz 2C". When the customer care agent has received the new address of John Doe, he or she searches 750, 751 in the index 1 of client application 1 for the internal ID of John Doe. The index 1 of client application 1 finds the ID of John Doe, i.e. "145", and sends the ID back 752, 753 to the customer care agent at the Front end 1 connected to Client application 1. The customer care agent inputs the address "xyz 2c" for ID "145" into the front-end computer Front-end 1, where after Front-end 1 sends an address update 754 to Customer manager 1 of Application 1, which update the Customer manager 1 forwards 755 to the database, DB, for storage. The database acknowledges 756, 757 completed storing to the Customer manager 1 and further to the Front-end 1. The database then puts a notification for address update 758 into its messaging queue, and the messaging queue sends the notification of update address 759 comprising Id "145" and address "xyz 2c" to the index handling units Index 1 of Application 1. The messaging queue as well sends the notification of updated address 760 to the index handling unit Index 2 of Application 2, as well as to any other applications/clients connected to the database. Consequently, the next time any data of customer John Doe is searched for, his new address can be found from any front-end computer connected to any of the client application connected to the database, via the Indexes stored at the client applications.

Referring again to fig. 3, a system 300 is provided, operable in a data communication network. The system comprises a database 310, a first network node 321 and a second network node 322. The first and the second network nodes 321, 322 are connected to the database 310, the database 310 operating as a server with respect to the first and the second network nodes 321, 322 operating as clients to the database 310. The system is configured for handling data posts, wherein each data post comprises one or more data values of different categories and a unique ID of the data post. The system 300 is operative for sending, by the first network node 321 to the database 310, a request for adding data to the database 310, the request comprising the data, the data including a first data value and a first ID of the data. Further, the system is operative for storing, by the database 310, the first ID and the first data value as a data post. Further, the system is operative for sending, by the database 310 to the second network node 322, a message comprising the first ID and the first data value, and storing, by the second network node 322, the first ID linked to the first data value, thus making the data stored at the database 310, received from the first network node 321, searchable at the second network node 322.

According to an embodiment, the different categories of the data values are index categories or non-index categories, wherein the first data value is of an index category and the received data further comprises a second data value of a non-index category. Further, the database is arranged to store the second data value as well as the first data value and the first ID as the data post. Further, the database 310 is arranged to send the message to the first and second network nodes comprising the first ID and the first data value but not the second data value.

The second network node 322 is arranged to store the first ID linked to the first data value by storing the first ID in an index storage of the second network node, the index storage comprising an index group comprising the first ID as well as other IDs of other data posts received by the second network node that also have the first data value.

According to another embodiment, the system is further operative for sending, by the database 310, a notification to the second network node of new data to be stored at the second network node, the notification having a time stamp, and requesting by the second network node, the new data according to the notification and the time stamp. Further, the database is arranged to send the message comprising the first ID and the first data value in response to the request by the second network node.

According to another embodiment, the system is further operative for sending, by the first network node 321 to the database 310, a request for data stored at the database for a plurality of data posts, sending by the database 310 to the first network node 321, in response to the request, the data of the plurality of data posts to the first network node, and creating, by the first network node 321, a local searchable data storage of the data of the plurality of data posts received.

According to another embodiment, the system is further operative for capturing, by the first network node, a snapshot of data stored at the first network node, data that was received from the database 310, the data comprising the first ID and the first data value, and sending, by the first network node 321 to the database 310, the snapshot of data stored at the first network node. Further, the system is further operative for storing, by the database, the received snapshot, sending, by the second network node 322 to the database 310, after the snapshot has been stored, a request for the latest stored snapshot, and sending, by the database 310 to the second network node 322, the stored snapshot, in response to the request from the second network node.

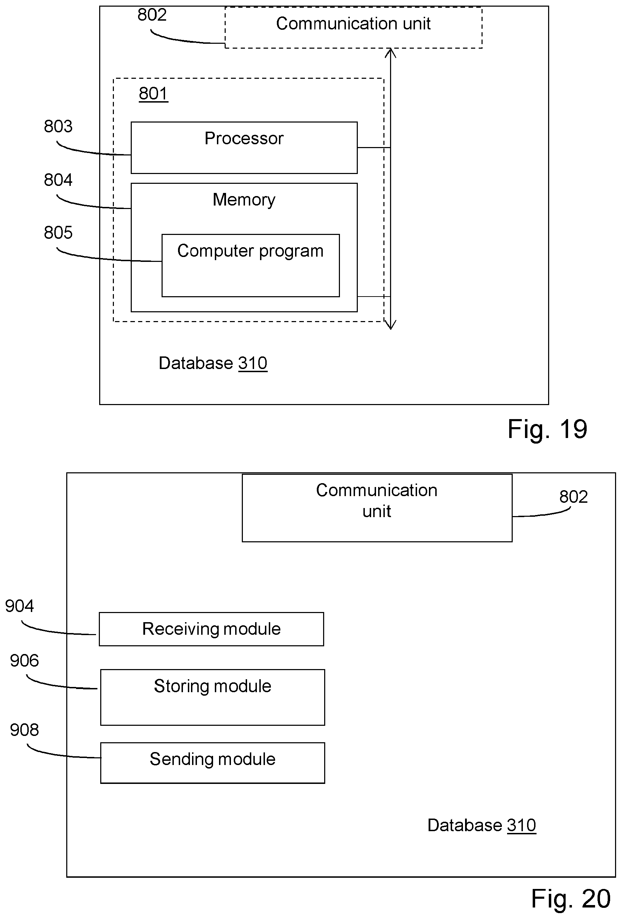

Fig. 19, in conjunction with fig. 3, describes a database 310 operable in a data communication network as a server with respect to a first and a second network node 321, 322 operating as clients to the database server 310. The database is configured for handling data posts, each data post comprising one or more data values of different categories and a unique ID of the data post. The database 310 comprises a processor 803 and a memory 804, said memory containing instructions executable by said processor, whereby the database 310 is operative for receiving, from the first network node 321, a request for adding data to the database 310, the request comprising the data, the data including a first data value and a first ID of the data. The database is further operative for storing the first ID and the first data value as a data post. The database is further operative for, sending a message to the second network node 322, the message comprising the first ID and the first data value, so that the second network node can store the first ID linked to the first data value, thus making the data stored at the database 310 searchable at the second network node.

According to an embodiment, the different categories of the data values are index categories or non-index categories, wherein the first data value is of an index category and the received data further comprises a second data value of a non-index category. The database is operative for storing the second data value as well as the first data value and the first ID as the data post. Further, the database is operative for sending the message comprising the first ID and the first data value to the second network node comprising the first ID and the first data value but not the second data value.

According to another embodiment, the database is further operative for sending a notification to the second network node of new data to be stored at the second network node, the notification having a time stamp, and receiving a request from the second network node of the new data according to the notification and the time stamp. Further, the database is operative for sending the message comprising the first ID and the first data value in response to the request received from the second network node.

According to another embodiment, the database is further operative for receiving, from the first network node 321, a snapshot of data stored at the first network node, data that was received from the database 310, the data comprising the first ID and the first data value, and storing the received snapshot. The database is further operative for receiving, from the second network node 322, after the snapshot has been stored, a request for the latest stored snapshot of data, and sending to the second network node 322, the stored snapshot, in response to the request from the second network node. According to other embodiments, the database 310 may further comprise a communication unit 802, which may be considered to comprise conventional means for communication with the first and second network nodes. The instructions executable by said processor 803 may be arranged as a computer program 805 stored e.g. in said memory 804. The processor 803 and the memory 804 may be arranged in a sub-arrangement 801. The sub-arrangement 801 may be a micro-processor and adequate software and storage therefore, a Programmable Logic Device, PLD, or other electronic component(s)/processing circuit(s) configured to perform the actions and/or methods mentioned above.

The computer program 805 may comprise computer readable code means, which when run in the database 310 causes the database 310 to perform the steps described in any of the described embodiments of the database. The computer program 805 may be carried by a computer program product connectable to the processor 803. The computer program product may be the memory 804. The memory 804 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory 804. Alternatively, the computer program may be stored on a server or any other entity connected to the communication network to which the database has access via the communication unit 802. The computer program may then be downloaded from the server into the memory 804.

Fig. 20, in conjunction with fig. 3, shows an alternative embodiment of a database 310 operable in a data communication network as a server with respect to a first and a second network node 321, 322 operating as clients to the database server 310, the database being configured for handling data posts, each data post comprising one or more data values of different categories and a unique ID of the data post. The database 310 comprises a receiving module 904 for receiving, from the first network node 321, a request for adding data to the database 310, the request comprising the data, the data including a first data value and a first ID of the data, and a storing module 906 for storing the first ID and the first data value as a data post. The database 310 further comprises a sending module 908 for sending a message to the second network node 322, the message comprising the first ID and the first data value, so that the second network node can store the first ID linked to the first data value, thus making the data stored at the database 310 searchable at the second network node. The database 310 may further comprise a communication unit 802 similar to the communication unit of fig. 19.

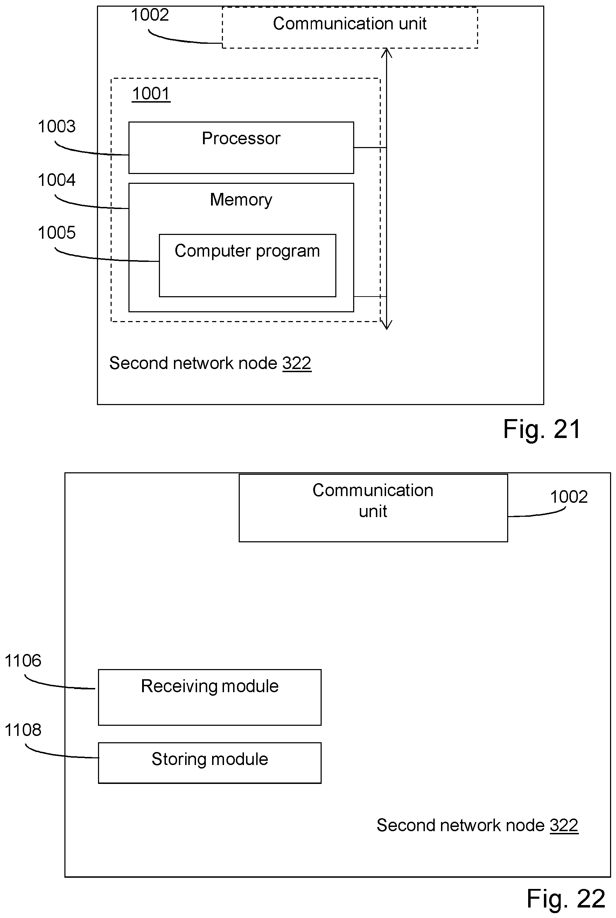

Fig. 21, in conjunction with fig. 3, describes a second network node 322 operable in a data communication network as a client with respect to a database 310 operating as a server to the second network node 322. The network further comprises a first network node 321 operating as a client with respect to the database. The second network node is configured for handling data posts, each data post comprising one or more data values of different categories and a unique ID of the data post. The second network node 322 comprises a processor 1003 and a memory 1004. The memory contains instructions executable by said processor, whereby the second network node 322 is operative for receiving a message from the database 310, the message comprising a first ID and a first data value, the message being received in response to a request from the first network node 321 to the database 310 for adding the first data value and the first ID to the database. The second network node is further operative for storing the first ID linked to the first data value, thus making the first ID and the first data value stored at the database 310 searchable at the second network node.

According to an embodiment, the different categories of the data values are index categories or non-index categories, wherein the first data value is of an index category and the message that the second network node is operative for receiving from the database comprises index category values but not non-index category values.

The second network node is operative for storing the first ID linked to the first data value by storing the first ID in an index storage, the index storage comprising an index group comprising the first ID as well as other IDs of other data posts received by the second network node that also have the first data value.

According to another embodiment, the second network node is further operative for receiving, from the database 310, a notification of new data to be stored at the second network node, the notification having a time stamp, requesting from the database, the new data according to the notification and the time stamp, and receiving the message comprising the first ID and the first data value in response to the sent request.

According to another embodiment, the second network node is further operative for searching for data related to the first ID and receiving the first data value from a storage linked to the second network node.

According to other embodiments, the second network node 322 may further comprise a communication unit 1002, which may be considered to comprise conventional means for communication with the database. The instructions executable by said processor 1003 may be arranged as a computer program 1005 stored e.g. in said memory 1004. The processor 1003 and the memory 1004 may be arranged in a sub-arrangement 1001. The sub-arrangement 1001 may be a micro-processor and adequate software and storage therefore, a Programmable Logic Device, PLD, or other electronic component(s)/processing circuit(s) configured to perform the actions and/or methods mentioned above.

The computer program 1005 may comprise computer readable code means, which when run in the second network node 322 causes the second network node 322 to perform the steps described in any of the described embodiments of the second network node. The computer program 1005 may be carried by a computer program product connectable to the processor 1003. The computer program product may be the memory 1004. The memory 1004 may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory 1004. Alternatively, the computer program may be stored on a server or any other entity connected to the communication network to which the second network node 322 has access via its communication unit 1002. The computer program may then be downloaded from the server into the memory 1004.

Fig. 22, in conjunction with fig. 3, shows an alternative embodiment of a second network node 322 operable in a data communication network as a client with respect to a database 310 operating as a server to the second network node 322. The network further comprises a first network node 321 operating as a client with respect to the database, the second network node being configured for handling data posts, wherein each data post comprises one or more data values of different categories and a unique ID of the data post. The second network node 322 comprises a receiving module 1106 for receiving a message from the database 310, the message comprising a first ID and a first data value, the message being received in response to a request from the first network node 321 to the database 310 for adding the first data value and the first ID to the database. The second network node further comprising a storing module 1108 for storing the first ID linked to the first data value, thus making the first ID and the first data value stored at the database 310 searchable at the second network node. Although the description above contains a plurality of specificities, these should not be construed as limiting the scope of the concept described herein but as merely providing illustrations of some exemplifying embodiments of the described concept. It will be appreciated that the scope of the presently described concept fully encompasses other embodiments which may become obvious to those skilled in the art, and that the scope of the presently described concept is accordingly not to be limited. Reference to an element in the singular is not intended to mean "one and only one" unless explicitly so stated, but rather "one or more." Moreover, it is not necessary for an apparatus or method to address each and every problem sought to be solved by the presently described concept, for it to be encompassed hereby. In the exemplary figures, a broken line generally signifies that the feature within the broken line is optional.

## Claims

1. A method performed by a system of a data communication network, the system comprising a database (310), a first network node (321) and a second network node (322) the first and the second network node (321, 322) being connected to the database (310), the database (310) operating as a server with respect to the first and the second network nodes (321, 322) operating as clients to the database (310), the system handling data posts, wherein each data post comprises one or more data values of different categories and a unique identification, ID, of the data post, the method comprising:
sending (350), by the first network node (321) to the database (310), a request for adding data to the database (310), the request comprising the data, the data including a first data value and a first ID of the data,
storing (352), by the database (310), the first ID and the first data value as a data post,
sending (358), by the database (310) to the second network node (322), a message comprising the first ID and the first data value, and
creating (600) an index in an index storage and storing (360) in the index storage, by the second network node (322), the first ID linked to the first data value, thus making the data stored at the database (310), received from the first network node (321), searchable at the second network node (322) **characterized in that** the storing (360) performed by the second network node (322) comprises storing the first ID in an index storage of the second network node, the index storage comprising an index group comprising the first ID as well as other IDs of other data posts received by the second network node that also have the first data value.

2. A method performed by a second network node (322) operating in a data communication network as a client with respect to a database (310) operating as a server to the second network node (322), the network further comprising a first network node (321) operating as a client with respect to the database, the method being for handling data posts, each data post comprising one or more data values of different categories and a unique ID of the data post, the method comprising:
creating (600) an index in an index storage;
receiving (506) a message from the database (310), the message comprising a first ID and a first data value, the message being received in response to a request from the first network node (321) to the database (310) for adding the first data value and the first ID to the database, and
storing (508) the first ID linked to the first data value in the index storage, thus making the first ID and the first data value stored at the database (310) searchable at the second network node **characterized in that** the index storage comprising an index group comprising the first ID as well as other IDs of other data posts received by the second network node that also have the first data value.

3. Method according to claim 2, wherein the different categories of the data values are index categories or non-index categories, wherein the first data value is of an index category and the message received (506) from the database comprises index category values but not non-index category values.

4. Method according to any of claims 2-3, further comprising:
receiving (502), from the database (310), a notification of new data to be stored at the second network node, the notification having a time stamp, and
requesting (504) from the database, the new data according to the notification and the time stamp,
and wherein the message comprising the first ID and the first data value is received (506) in response to the sent request (504).

5. Method according to any of claims 2-4, further comprising searching for data related to the first ID and receiving the first data value from a storage linked to the second network node.

6. A system (300) operable in a data communication network, the system comprising a database (310), a first network node (321) and a second network node (322), the first and the second network node (321, 322) being connected to the database (310), the database (310) operating as a server with respect to the first and the second network nodes (321, 322) operating as clients to the database (310), the system being configured for handling data posts, wherein each data post comprises one or more data values of different categories and a unique identification, ID, of the data post, the system (300) being operative for:
sending, by the first network node (321) to the database (310), a request for adding data to the database (310), the request comprising the data, the data including a first data value and a first ID of the data,
storing, by the database (310), the first ID and the first data value as a data post,
sending, by the database (310) to the second network node (322), a message comprising the first ID and the first data value, and
creating (600) an index in an index storage and storing in the index storage, by the second network node (322), the first ID linked to the first data value, thus making the data stored at the database (310), received from the first network node (321), searchable at the second network node (322) **characterised in that** the second network node (322) is arranged to store the first ID linked to the first data value by storing the first ID in an index storage of the second network node, the index storage comprising an index group comprising the first ID as well as other IDs of other data posts received by the second network node that also have the first data value.

7. A second network node (322) operable in a data communication network as a client with respect to a database (310) operating as a server to the second network node (322), the network further comprising a first network node (321) operating as a client with respect to the database, the second network node being configured for handling data posts, each data post comprising one or more data values of different categories and a unique ID of the data post, the second network node (322) comprising a processor (1003) and a memory (1004), said memory containing instructions executable by said processor, whereby the second network node (322) is operative for:
creating (600) an index in an index storage;
receiving a message from the database (310), the message comprising a first ID and a first data value, the message being received in response to a request from the first network node (321) to the database (310) for adding the first data value and the first ID to the database, and
storing the first ID linked to the first data value in the index storage, thus making the first ID and the first data value stored at the database (310) searchable at the second network node **characterised in that** the second network node is further operative for storing the first ID linked to the first data value, the index storage comprising an index group comprising the first ID as well as other IDs of other data posts received by the second network node that also have the first data value.

8. Second network node according to claim 7, wherein the different categories of the data values are index categories or non-index categories, wherein the first data value is of an index category and the message that the second network node is operative for receiving from the database comprises index category values but not non-index category values.

9. Second network node according to any of claims 7-8, further being operative for:
receiving, from the database (310), a notification of new data to be stored at the second network node, the notification having a time stamp, and
requesting from the database, the new data according to the notification and the time stamp, and
receiving the message comprising the first ID and the first data value in response to the sent request.

10. Second network node according to any of claims 7-9, further being operative for searching for data related to the first ID and receiving the first data value from a storage linked to the second network node.

11. A computer program (1005) comprising computer readable code means to be run in a second network node (322) of a data communication network, the second network node being configured for handling data posts, each data post comprising one or more data values of different categories and a unique ID of the data post, which computer readable code means when run in the second network node causes the second network node (322) to perform the following steps:
creating (600) an index in an index storage;
receiving a message from a database (310), the message comprising a first ID and a first data value, the message being received in response to a request from a first network node (321) to the database (310) for adding the first data value and the first ID to the database, and
storing the first ID linked to the first data value in the index storage, thus making the first ID and the first data value stored at the database (310) searchable at the second network node (322) **characterised in that** the second network node is further operative for storing the first ID linked to the first data value, the index storage comprising an index group comprising the first ID as well as other IDs of other data posts received by the second network node that also have the first data value.

12. A carrier containing the computer program (1005) according to claim 11, wherein the carrier is one of an electronic signal, optical signal, radio signal or computer readable storage medium.

## Patentansprüche

1. Verfahren, durchgeführt von einem System eines Datenkommunikationsnetzwerks, wobei das System eine Datenbank (310), einen ersten Netzwerkknoten (321) und einen zweiten Netzwerkknoten (322) umfasst, wobei der erste und der zweite Netzwerkknoten (321, 322) mit der Datenbank (310) verbunden sind, die Datenbank (310) als Server in Bezug auf den ersten und den zweiten Netzwerkknoten (321, 322) betrieben wird, die als Clients für die Datenbank (310) betrieben werden, das System Datenposts handhabt, wobei jeder Datenpost einen oder mehrere Datenwerte von unterschiedlichen Kategorien und eine einmalige Identifizierung, ID, des Datenposts umfasst, wobei das Verfahren Folgendes umfasst:
Senden (350) durch den ersten Netzwerkknoten (321) einer Anfrage an die Datenbank (310) zum Hinzufügen von Daten zu der Datenbank (310), wobei die Anfrage die Daten umfasst und die Daten einen ersten Datenwert und eine erste ID der Daten einschließen,
Speichern (352) durch die Datenbank (310) der ersten ID und des ersten Datenwerts als Datenpost,
Senden (358) durch die Datenbank (310) einer Nachricht an den zweiten Netzwerkknoten (322), die die erste ID und den ersten Datenwert umfasst, und
Erstellen (600) eines Indizes in einem Indexspeicher und Speichern (360) der ersten ID, die mit dem ersten Datenwert verknüpft ist, in dem Indexspeicher durch den zweiten Netzwerkknoten (322), um so die Daten in der Datenbank (310), die von dem ersten Netzwerkknoten (321) empfangen wurde, gespeichert und an dem zweiten Netzwerkknoten (322) suchbar macht, **dadurch gekennzeichnet, dass** Speichern (360), das durch den zweiten Netzwerkknoten (322) durchgeführt wird, Speichern der ersten ID in einem Indexspeicher des zweiten Netzwerkknotens umfasst, wobei der Indexspeicher eine Indexgruppe umfasst, die die erste ID so wie andere IDs von anderen Datenposts umfasst, die durch den zweiten Netzwerkknoten empfangen wurden, und auch den ersten Datenwert aufweisen.

2. Verfahren, durchgeführt durch einen zweiten Netzwerkknoten (322), der in einem Datenkommunikationsnetzwerk als Client in Bezug auf eine Datenbank (310) betrieben wird, die als Server für den zweiten Netzwerkknoten (322) betrieben wird, wobei das Netzwerk weiter einen ersten Netzwerkknoten (321) umfasst, der als Client in Bezug auf die Datenbank betrieben wird, wobei das Verfahren zum Handhaben von Datenposts dient, wobei jeder Datenpost einen oder mehrere Datenwerte von unterschiedlichen Kategorien und eine einmalige ID des Datenposts umfasst, wobei das Verfahren Folgendes umfasst:
Erstellen (600) eines Indizes in einem Indexspeicher;
Empfangen (506) einer Nachricht von der Datenbank (310), wobei die Nachricht eine erste ID und einen ersten Datenwert umfasst, wobei die Nachricht als Antwort auf eine Anfrage von dem ersten Netzwerkknoten (321) an die Datenbank (310) zum Hinzufügen des ersten Datenwerts und der ersten ID zu der Datenbank empfangen wird, und
Speichern (508) der ersten ID, die mit dem ersten Datenwert verknüpft ist, in dem Indexspeicher, um so die erste ID und den ersten Datenwert in der Datenbank (310) gespeichert und an dem zweiten Netzwerkknoten suchbar zu machen, **dadurch gekennzeichnet, dass** der Indexspeicher eine Indexgruppe umfasst, die die erste ID sowie andere IDs von anderen Datenposts umfasst, die durch den zweiten Netzwerkknoten empfangen wurden, die auch dem ersten Datenwert aufweisen.

3. Verfahren nach Anspruch 2, wobei die unterschiedlichen Kategorien der Datenwerte Indexkategorien oder Nicht-Indexkategorien sind, wobei der erste Datenwert von einer Indexkategorie ist und die Nachricht, die von der Datenbank empfangen (506) wird, Indexkategoriewerte aber keine Nicht-Indexkategoriewerte umfasst.

4. Verfahren nach einem der Ansprüche 2 - 3, weiter umfassend:
Empfangen (502) von der Datenbank (310) einer Benachrichtigung von neuen Daten, die an dem zweiten Netzwerkknoten gespeichert werden sollen, wobei die Benachrichtigung einen Zeitstempel aufweist, und
Abfragen (504) der neuen Daten von der Datenbank gemäß der Benachrichtigung und dem Zeitstempel,
und wobei die Nachricht die erste ID und den ersten Datenwert umfasst, der als Antwort auf die gesendete Anfrage (504) empfangen (506) wird.

5. Verfahren nach einem der Ansprüche 2 - 4, weiter umfassend Suchen nach Daten, die zu der ersten ID zugehörig sind, und Empfangen des ersten Datenwerts von einem Speicher, der mit dem zweiten Netzwerkknoten verknüpft ist.

6. System (300), das in einem Datenkommunikationsnetzwerk betriebsfähig ist, wobei das System eine Datenbank (310), einen ersten Netzwerkknoten (321) und einen zweiten Netzwerkknoten (322) umfasst, wobei der erste und der zweite Netzwerkknoten (321, 322) mit der Datenbank (310) verbunden sind, die Datenbank (310) als Server in Bezug auf den ersten und den zweiten Netzwerkknoten (321, 322) betrieben wird, die als Clients für die Datenbank (310) betrieben werden, wobei das System zum Handhaben von Datenposts konfiguriert ist, wobei jeder Datenpost einen oder mehrere Datenwerte von unterschiedlichen Kategorien und eine einmalige Identifizierung, ID, des Datenposts umfasst, wobei das System (300) wirksam ist zum:
Senden durch den ersten Netzwerkknoten (321) einer Anfrage an die Datenbank (310) zum Hinzufügen von Daten zu der Datenbank (310), wobei die Anfrage die Daten umfasst, wobei die Daten einen ersten Datenwert und eine erste ID der Daten einschließen,
Speichern durch die Datenbank (310) der ersten ID und des ersten Datenwerts als Datenpost,
Senden durch die Datenbank (310) einer Nachricht an den zweiten Netzwerkknoten (322), die die erste ID und den ersten Datenwert umfasst, und
Erstellen (600) eines Indizes in einem Indexspeicher und Speichern in dem Indexspeicher durch den zweiten Netzwerkknoten (322) der ersten ID, die mit dem ersten Datenwert verknüpft ist, um so die Daten in der Datenbank (310), die von dem ersten Netzwerkknoten (321) empfangen wurden, gespeichert und an dem zweiten Netzwerkknoten (322) suchbar zu machen, **dadurch gekennzeichnet, dass** der zweite Netzwerkknoten (322) angeordnet ist zum Speichern der ersten ID, die mit dem ersten Datenwert verknüpft ist, durch Speichern der ersten ID in einem Indexspeicher des zweiten Netzwerkknotens, wobei der Indexspeicher eine Indexgruppe umfasst, die die erste ID so wie andere IDs von anderen Datenposts umfasst, die durch den zweiten Netzwerkknoten empfangen wurden und auch den ersten Datenwert aufweisen.

7. Zweiter Netzwerkknoten (322), der in einem Datenkommunikationsnetzwerk als Client in Bezug auf eine Datenbank (310) betriebsfähig ist, die als Server für den zweiten Netzwerkknoten (322) betrieben wird, wobei das Netzwerk weiter einen ersten Netzwerkknoten (321) umfasst, der als Client in Bezug auf die Datenbank betrieben wird, wobei der zweite Netzwerkknoten konfiguriert ist zum Handhaben von Datenposts, wobei jeder Datenpost einen oder mehrere Datenwerte von unterschiedlichen Kategorien und eine einmalige ID des Datenposts umfasst, wobei der zweite Netzwerkknoten (322) einen Prozessor (1003) und einen Speicher (1004) umfasst, wobei der Speicher Anweisungen enthält, die von dem Prozessor ausführbar sind, wodurch der zweite Netzwerkknoten (322) wirksam ist zum:
Erstellen (600) eines Indizes in einem Indexspeicher;
Empfangen einer Nachricht von der Datenbank (310), wobei die Nachricht eine erste ID und einen ersten Datenwert umfasst, wobei die Nachricht als Antwort auf eine Anfrage von dem ersten Netzwerkknoten (321) an die Datenbank (310) zum Hinzufügen des ersten Datenwerts und der ersten ID zu der Datenbank empfangen wird, und
Speichern der ersten ID, die mit dem ersten Datenwert verknüpft ist, in dem Indexspeicher, um so die erste ID und den ersten Datenwert in der Datenbank (310) gespeichert und an dem zweiten Netzwerkknoten suchbar zu machen, **dadurch gekennzeichnet, dass** der Indexspeicher eine Indexgruppe umfasst, die die erste ID sowie andere IDs von anderen Datenposts umfasst, die durch den zweiten Netzwerkknoten empfangen wurden, die auch dem ersten Datenwert aufweisen.

8. Zweiter Netzwerkknoten nach Anspruch 7, wobei die unterschiedlichen Kategorien der Datenwerte Indexkategorien oder Nicht-Indexkategorien sind, wobei der erste Datenwert von einer Indexkategorie ist und die Nachricht, für die der zweite Netzwerkknoten zum Empfangen von der Datenbank wirksam ist, Indexkategoriewerte aber keine Nicht-Indexkategoriewerte umfasst.

9. Zweiter Netzwerkknoten nach einem der Ansprüche 7-8, der weiter wirksam ist zum:
Empfangen von der Datenbank (310) einer Benachrichtigung von neuen Daten, die an dem zweiten Netzwerkknoten gespeichert werden sollen, wobei die Benachrichtigung einen Zeitstempel aufweist, und
Abfragen der neuen Daten von der Datenbank gemäß der Benachrichtigung und dem Zeitstempel, und
Empfangen der Nachricht, die die erste ID und den ersten Datenwert umfasst, als Antwort auf die gesendete Anfrage.

10. Zweiter Netzwerkknoten nach einem der Ansprüche 7 - 9, der weiter wirksam ist zum Suchen nach Daten, die zu der ersten ID zugehörig sind, und Empfangen des ersten Datenwerts von einem Speicher, der mit dem zweiten Netzwerkknoten verknüpft ist.

11. Computerprogramm (1005), umfassend computerlesbare Codemittel, die an einem zweiten Netzwerkknoten (322) eines Datenkommunikationsnetzwerks laufen sollen, wobei der zweite Netzwerkknoten konfiguriert ist zum Handhaben von Datenposts, wobei jeder Datenpost einen oder mehrere Datenwerte von unterschiedlichen Kategorien und eine einmalige ID des Datenposts umfasst, wobei die computerlesbaren Codemittel, wenn sie an dem zweiten Netzwerkknoten laufen, verursachen, dass der zweite Netzwerkknoten (322) folgende Schritte durchführt: Erstellen (600) eines Indizes in einem Indexspeicher;
Empfangen einer Nachricht von der Datenbank (310), wobei die Nachricht eine erste ID und einen ersten Datenwert umfasst, wobei die Nachricht als Antwort auf eine Anfrage von dem ersten Netzwerkknoten (321) an die Datenbank (310) zum Hinzufügen des ersten Datenwerts und der ersten ID zu der Datenbank empfangen wird, und
Speichern der ersten ID, die mit dem ersten Datenwert verknüpft ist, in dem Indexspeicher, um so die erste ID und den ersten Datenwert in der Datenbank (310) gespeichert und an dem zweiten Netzwerkknoten (322) suchbar zu machen, **dadurch gekennzeichnet, dass** der zweiten Netzwerkknoten weiter wirksam ist zum Speichern der ersten ID, die mit dem ersten Datenwert verknüpft ist, in dem Indexspeicher, der eine Indexgruppe umfasst, die die erste ID sowie andere IDs von anderen Datenposts umfasst, die durch den zweiten Netzwerkknoten empfangen wurden und auch den ersten Datenwert aufweisen.

12. Träger, der das Computerprogramm (1005) nach Anspruch 11 enthält, wobei der Träger eines von einem elektronischen Signal, optischen Signal, Funksignal oder computerlesbarem Speichermedium ist.

## Revendications

1. Procédé effectué par un système de réseau de communication de données, le système comprenant une base de données (310), un premier nœud de réseau (321) et un second nœud de réseau (322), le premier et le second nœud de réseau (321, 322) étant connectés à la base de données (310), la base de données (310) fonctionnant comme serveur par rapport aux premier et second nœuds de réseau (321, 322) fonctionnant comme clients par rapport à la base de données (310), le système gérant des publications de données, dans lequel chaque publication de données comprend une ou plusieurs valeurs de données de différentes catégories et une identification unique, ID, de la publication de données, le procédé comprenant :
l'envoi (350), par le premier nœud de réseau (321) à la base de données (310), d'une demande pour ajouter des données à la base de données (310), la demande comprenant les données, les données incluant une première valeur de données et une première ID des données,
le stockage (352), par la base de données (310), de la première ID et de la première valeur de données en tant qu'une publication de données,
l'envoi (358), par la base de données (310) au second nœud de réseau (322), d'un message comprenant la première ID et la première valeur de données, et
la création (600) d'un index dans un stockage d'index et le stockage (360) dans le stockage d'index, par le second nœud de réseau (322), de la première ID à la première valeur de données, rendant ainsi les données stockées au niveau de la base de données (310), reçues à partir du premier nœud de réseau (321), consultable au niveau du second nœud de réseau (322) **caractérisé en ce que** le stockage (360) effectué par le second nœud de réseau (322) comprend le stockage de la première ID dans un stockage d'index du second nœud de réseau, le stockage d'index comprenant un groupe d'index comprenant la première ID ainsi que d'autres ID d'autres publications de données reçues par le second nœud de réseau qui présentent également la première valeur de données.

2. Procédé effectué par un second nœud de réseau (322) fonctionnant dans un réseau de communication de données comme un client par rapport à une base de données (310) fonctionnant comme serveur au niveau du second nœud de réseau (322), le réseau comprenant en outre un premier nœud de réseau (321) fonctionnant comme client par rapport à la base de données, le procédé étant pour gérer des publications de données, chaque publication de données comprenant une ou plusieurs valeurs de données de différentes catégories et une ID unique de la publication de données, le procédé comprenant :
la création (600) d'un index dans un stockage d'index ;
la réception (506) d'un message de la base de données (310), le message comprenant une première ID et une première valeur de données, le message étant reçu en réponse à une demande du premier nœud de réseau (321) au niveau de la base de données (310) pour ajouter la première valeur de données et la première ID au niveau de la base de données, et
le stockage (508) de la première ID liée à la première valeur de données dans le stockage d'index, rendant ainsi la première ID et la première valeur de données stockée au niveau de la base de données (310) consultable au niveau du second nœud de réseau **caractérisé en ce que** le stockage d'index comprenant un groupe d'index comprenant la première ID ainsi que d'autres ID d'autres publications de données reçues par le second nœud de réseau qui présentent également la première valeur de données.

3. Procédé selon la revendication 2, dans lequel les différentes catégories des valeurs de données sont des catégories d'index ou des catégories sans index, dans lequel la première valeur de données est d'une catégorie d'index et le message reçu (506) à partir de la base de données comprend des valeurs de catégories d'index mais pas de valeurs de catégories sans index.

4. Procédé selon l'une quelconque des revendications 2-3, comprenant en outre :
la réception (502), à partir de la base de données (310), d'une notification de nouvelles données à stocker au niveau du second nœud de réseau, la notification présentant un horodatage électronique, et
la demande (504) à partir de la base de données, de nouvelles données selon la notification et l'horodatage électronique,
et dans lequel le message comprenant la première ID et la première valeur de données est reçu (506) en réponse à la demande envoyée (504).

5. Procédé selon l'une quelconque des revendications 2-4, comprenant en outre la recherche des données liées à la première ID et la réception de la première valeur de données à partir d'un stockage lié au second nœud de réseau.

6. Système (300) pouvant fonctionner dans un réseau de communication de données, le système comprenant une base de données (310), un premier nœud de réseau (321) et un second nœud de réseau (322), le premier et le second nœud de réseau (321, 322) étant connectés à la base de données (310), la base de données (310) fonctionnant comme un serveur par rapport aux premier et second nœuds de réseau (321, 322) fonctionnant comme clients par rapport à la base de données (310), le système étant configuré pour gérer des publications de données, dans lequel chaque publication de données comprend une ou plusieurs valeurs de données de différentes catégories et une identification unique, ID, de la publication de données, le système (300) étant fonctionnel pour :
l'envoi, par le premier nœud de réseau (321) à la base de données (310), d'une demande pour ajouter des données à la base de données (310), la demande comprenant les données, les données incluant une première valeur de données et une première ID des données,
le stockage, par la base de données (310), de la première ID et de la première valeur de données en tant qu'une publication de données,
l'envoi, par la base de données (310) au second nœud de réseau (322), d'un message comprenant la première ID et la première valeur de données, et
la création (600) d'un index dans un stockage d'index et le stockage (360) dans le stockage d'index, par le second nœud de réseau (322), de la première ID liée à la première valeur de données, rendant ainsi les données stockées au niveau de la base de données (310), reçues à partir du premier nœud de réseau (321), consultable au niveau du second nœud de réseau (322) **caractérisé en ce que** le second nœud de réseau (322) est agencé pour stocker la première ID liée à la première valeur de données en stockant la première ID dans un stockage d'index du second nœud de réseau, le stockage d'index comprenant un groupe d'index comprenant la première ID ainsi que d'autres ID d'autres publications de données reçues par le second nœud de réseau qui présentent également la première valeur de données.

7. Second nœud de réseau (322) pouvant fonctionner dans un réseau de communication comme client par rapport à une base de données (310) fonctionnant comme un serveur au niveau du second nœud de réseau (322), le réseau comprenant en outre un premier nœud de réseau (321) fonctionnant comme client par rapport à la base de données, le second nœud de réseau étant configuré pour gérer des publications de données, chaque publication de données comprenant une ou plusieurs valeurs de données de catégories différentes et une ID unique de la publication de données, le second nœud de réseau (322) comprenant un processeur (1003) et une mémoire (1004), ladite mémoire contenant des instructions exécutables par ledit processeur, selon lequel le second nœud de réseau (322) est fonctionnel pour :
la création (600) d'un index dans un stockage d'index ;
la réception d'un message de la base de données (310), le message comprenant une première ID et une première valeur de données, le message étant reçu en réponse à une demande du premier nœud de réseau (321) au niveau de la base de données (310) pour ajouter la première valeur de données et la première ID au niveau de la base de données, et
le stockage de la première ID liée à la première valeur de données dans le stockage d'index, rendant ainsi la première ID et la première valeur de données stockée au niveau de la base de données (310) consultable au niveau du second nœud de réseau **caractérisé en ce que** le second nœud de réseau est en outre fonctionnel pour stocker la première ID liée à la première valeur de données, le stockage d'index comprenant un groupe d'index comprenant la première ID ainsi que d'autres ID d'autres publications de données reçues par le second nœud de réseau qui présentent également la première valeur de données.

8. Second nœud de réseau selon la revendication 7, dans lequel les différentes catégories des valeurs de données sont des catégories d'index ou des catégories sans index, dans lequel la première valeur de données est d'une catégorie d'index et le message que le second nœud de réseau est fonctionnel pour recevoir à partir de la base de données comprend des valeurs de catégories d'index mais pas de valeurs de catégories sans index.

9. Second nœud de réseau selon l'une quelconque des revendications 7-8, étant en outre fonctionnel pour :
recevoir, à partir de la base de données (310), une notification de nouvelles données à stocker au niveau du second nœud de réseau, la notification présentant un horodatage, et
demander à partir de la base de données, de nouvelles données selon la notification et l'horodatage, et
recevoir le message comprenant la première ID et la première valeur de données en réponse à la demande envoyée.

10. Second nœud de réseau selon l'une quelconque des revendications 7-9, étant fonctionnel en outre pour rechercher des données liées à la première ID et recevoir la première valeur de données à partir d'un stockage lié au second nœud de réseau.

11. Programme informatique (1005) comprenant un moyen de code lisible par ordinateur à appliquer dans un second nœud de réseau (322) du réseau de communication de données, le second nœud de réseau étant configuré pour gérer des publications de données, chaque publication de données comprenant une ou plusieurs valeurs de données de différentes catégories et une ID unique de la publication de données, dans lequel les moyens de code lisibles par ordinateur, lorsqu'ils sont exécutés dans le second nœud de réseau, amènent le second nœud de réseau (322) à effectuer les étapes suivantes : création (600) d'un index dans un stockage d'index ;
la réception d'un message de la base de données (310), le message comprenant une première ID et une première valeur de données, le message étant reçu en réponse à une demande du premier nœud de réseau (321) au niveau de la base de données (310) pour ajouter la première valeur de données et la première ID au niveau de la base de données, et
le stockage de la première ID liée à la première valeur de données dans le stockage d'index, rendant ainsi la première ID et la première valeur de données stockée au niveau de la base de données (310) consultable au niveau du second nœud de réseau (322) **caractérisé en ce que** le second nœud de réseau est en outre fonctionnel pour stocker la première ID liée à la première valeur de données, le stockage d'index comprenant un groupe d'index comprenant la première ID ainsi que d'autres ID d'autres publications de données reçues par le second nœud de réseau qui présentent également la première valeur de données.

12. Transporteur contenant le programme informatique (1005) selon la revendication 11, dans lequel le transporteur est un parmi un signal électronique, un signal optique, un signal radio ou un support de stockage lisible sur ordinateur.
